# EUROPEAN PATENT APPLICATION

(11) **EP 1 521 479 A1**
(43) Date of publication of application: **06.04.2005**
(21) Application number: 03292440.9
(22) Date of filing: 02.10.2003
(51) Int. Cl.: H04N 9/31, G02F 1/1335

(54) **Projector device with lens array**

(71) Applicant: Thomson Licensing S.A., 92100 Boulogne-Billancourt (FR)
(72) Inventor: Chikazawa, Yoshiharu M., Yokohama, 221 (JP)
(74) Representative: Ruellan-Lemonnier, Brigitte

(57) **Abstract**

The invention relates to a projector device comprising a matrix type image element (18) and an optical system (20) for projecting the image on a screen (30).

The projector device comprises an array of lenses (16) in order to focus each pixel or sub-pixel element of the matrix type image on the screen (30) in such a way to produce a black matrix array inside of which are located the projected pixels or sub-pixels.

## Description

The invention relates to a device for projecting matrix type images on a screen.

Most of the image projectors project a matrix type image wherein each dot or element of the matrix is a pixel (picture element) or a sub-pixel i.e. one colour of a pixel.

The most typical physical supports for matrix type image are LCD (Liquid Crystal Display), LCOS (liquid crystal on silicon) or DMD (Digital Mirror Devices).

The major problem for projector devices is to maximize the light intensity projected on the screen. For this reason, in the matrix image source, the area of each pixel or sub-pixel must be maximized for a total given surface of the matrix image. Consequently, the spacing between the pixels or sub-pixels is minimized. However, this spacing cannot be too small because the larger is this spacing, the better is the sharpness of the image seen on the screen. The array of non luminous areas between pixels or sub-pixels on the screen is sometimes called a black matrix array.

The projector device according to the invention improves the sharpness of images projected on the screen without reducing the light intensity.

In order to obtain this result, the projector device according to the invention comprises an array of lenses which focus each pixel or sub-pixel on the screen, possibly in cooperation with a conventional projection optical system, in order to create spaces between pixels or sub-pixels on the screen, i.e. a black matrix array.

The lenses which create the black matrix array on the screen, and therefore improve the sharpness of the image, keep the light intensity of the projected image.

In an embodiment, the array of lenses which creates the spaces between pixels and the screen is of the fly-eye type.

In another embodiment, this array comprises one or two sets of elongated lenses, for instance, cylindrical lenses. When two sets are provided, the axis of the first set is perpendicular to the axis of the second set. These two sets are either separated or made in one sheet.

Other features and advantages of the invention will appear with the herein below description of certain of its embodiments, this description being made in connection with the following drawings wherein:

In brief, the invention relates to a projector device comprising a matrix type image element and an optical system for projecting the image on a screen, which comprises an array of lenses in order to focus each pixel or sub-pixel element of the matrix type image on the screen in such a way to produce a black matrix array inside of which are located the projected pixels or sub-pixels.

The array of lenses is, for instance, of the fly-eye type, the number of lenses corresponding to the number of pixels or sub-pixels of the image element.

The array of lenses may comprise an array of elongated cylindrical lenses. In an embodiment, this array of elongated cylindrical lenses comprises two sets of cylindrical lenses, the elongation axis of the first set being perpendicular to the elongation axis of the second set. The two sets of cylindrical lenses may be separate elements or may form a single element.

In an embodiment, the projector device comprises means to move the lens array in order to modify the dimensions of the black matrix pattern on the screen. In that case, two sets of cylindrical lenses are provided and the projector device may comprise means to display separately the two sets of cylindrical lenses.

In the projector device, the image element may be selected in the group comprising: a digital mirror device, a liquid crystal device and a liquid crystal on silicon.
figure 1 represents some pixels and the corresponding black matrix array of a projected image obtained with a conventional digital mirror device,
figure 2 is a drawing similar to figure 1 but for a projected image obtained with a projector device according to the invention,
figure 3 is a schematic diagram of a digital mirror device according to the invention,
figure 4 illustrates the operation of the device shown on figure 3,
figure 5 illustrates an other embodiment of the device shown on figure 3 and figure 4,
figure 6 represents an other embodiment of a projector device according to the invention, and
figure 7 and figure 8 show lens arrays which may be used with the embodiment represented on figure 6.

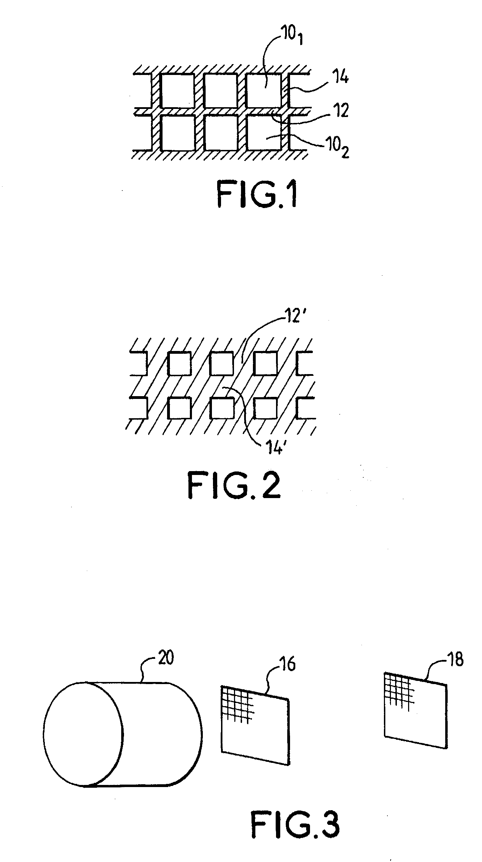

As shown on figure 1, in a conventional projector device, the pixels 10₁, 10₂, etc., projected on a screen are separated by small spaces 12, 14 which have a width much smaller than the dimensions of each pixel.

In order to improve the sharpness of the image projected on the screen, the invention provides means which reduce the dimensions of each pixel without reducing the light intensity of each of these pixels. As shown on figure 2, with the same pitch between pixels, the spaces 12', 14' between such pixels are significantly greater than with conventional projector device.

In order to obtain this result, the projector device represented on figures 3, 4 and 5 comprises an array of lenses 16 located between a mirror array device 18 and a projection optical system.

In this example, the digital mirror array receives collimated light which is also reflected as collimated light by the mirror array 18. To each pixel or sub-pixel of the mirror array 18 corresponds a lens 24ᵢ of the lens array 16 which focuses the parallel beam received from the mirror array 18. In this example, the number of lenses of the lens array 16 is equal to the number of pixels or sub-pixels of the mirror array 18.

In order to obtain a black matrix array on the screen, the focused light size on the screen must be at most equal to the pixel pitch on the screen.

In an other embodiment (not shown) a telecentric (wherein the exit pupil is set at infinite) system is located between array 16 and the projection system 20.

In an other embodiment, also not shown, the array 16 is located between the projection system 20 and the screen 30.

In a further embodiment, the fly-eye lens array 16 is located upstream the mirror array 18 in order to focus the light beam 22 on each pixel mirror.

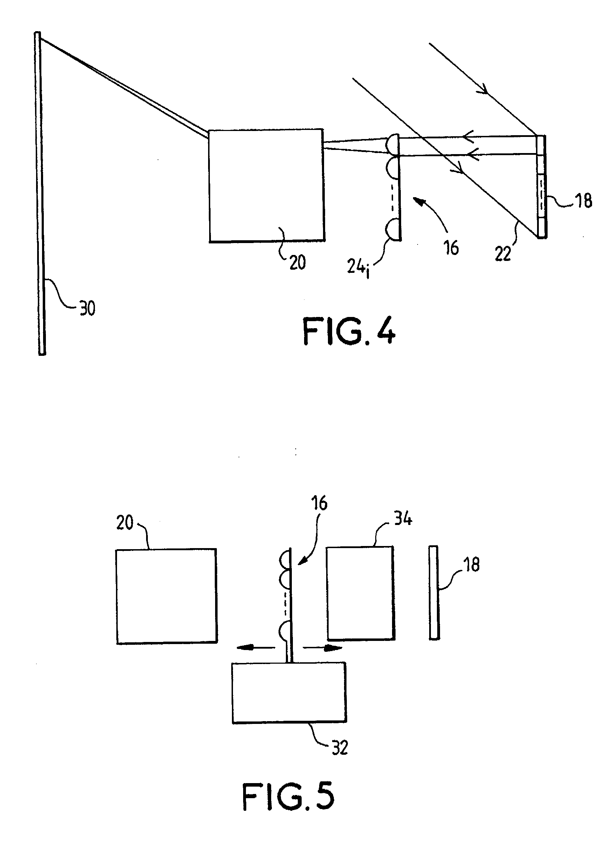

In the simplified example shown on figures 3 and 4, the projected image is monochrome. In order to obtain a colour image, it is necessary to use two or three sets comprising each a mirror array 18 and a lens array 16. In an other embodiment, one single fly-eye lens array 16 is used downstream of an optical system (not shown) for combining the monochrome images. In that case, the fly-eye lens array may be located upstream or downstream of the projection system 20.

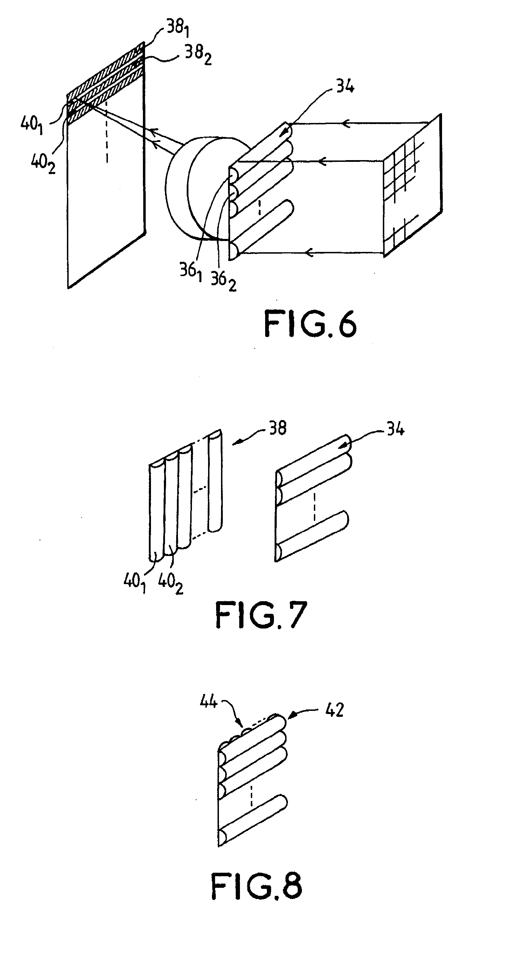

In the embodiment represented on figure 5, the axial position of the lens array is controllable by a device 32. When the position of the array 16 is changed, the size of each projected pixel on the screen is modified. In other words, with the device 32, it is possible to adjust the dimensions of the black array 12', 14' on the screen.

In this embodiment, an optical system 34 is located between the mirror array 18 and the lens array 16. This system 34 for instance when a LCD panel (instead of a mirror array 18) includes fly-eye lenses on this panel, in order to improve light efficiency. In that case, the function of optical system 34 between the lens array 16 and the panel is to compensate the influence of fly-eye lenses on LCD.

In an embodiment, the device 32 may be manually controlled.

In an other embodiment, the device 32 is automatically controlled. The control signal is for instance provided by a focus detection on the screen 30 and/or by the distance of the screen 30 and/or by a projection zoom ratio signal.

As already mentioned, the mirror array 18 may be replaced by any type of matrix type panel for forming images such as LCD or LCOS.

In the embodiment shown on figures 3-5, the fly-eye lens array 16 may be of any type such as plano-convex, double-convex, meniscus or cylindrical lens as shown on figures 6, 7 and 8.

With the embodiment shown on figures 3-5, it is possible to use any type of pixel or sub-pixel arrangement i.e., for instance, an arrangement of sub-pixels in squares, an arrangement of sub-pixels in a delta shape or a mosaic arrangement wherein RGB lines appear as oblique lines on the screen.

In the embodiment shown on figure 6, the lens array 34 has a set of parallel horizontal cylindrical lenses 36₁, 36₂, etc. In that case, the lens array 34 produces black stripes 38₁, 38₂ on the screen separating pixel lines 40₁, 40₂, etc.

In order to obtain a two-dimensional black matrix array, it is necessary to use two sets of lens arrays. In the example shown on figure 7, to the array 34 comprising cylindrical lenses of horizontal axis, is associated another array 38 of cylindrical lenses comprising cylindrical lenses with a vertical axis 40₁, 40₂, etc.

In the embodiment shown on figure 8, the cylindrical lens array is formed of one single sheet with, on one side, horizontal axis cylindrical lenses and, on the other side 44, cylindrical lenses with vertical axis.

In these embodiments, it is possible to use a device similar to device 32 of figure 5 for moving the lens arrays.

If the embodiment shown on figure 7 is used, and if the motions of arrays 34 and 38 are controlled individually, it is possible to control separately the width of the horizontal black stripes (with the position of array 34) and the width of the vertical black stripes (with the control of the position of array 38).

The invention which has been herein described may be combined with the arrangement described in a copending application entitled "Improvements to an image projector" wherein the optical arrangement of this projector comprises an array of light deviation elements, each element, such as a prism or a mirror, being associated to a pixel or a sub-pixel of the image device (i.e. of the matrix imaging device) in order to provide the image of the corresponding pixel or a sub-pixel on the screen. As mentioned in this co-pending application, as the light deviation elements are not necessarily image forming devices, such as lenses, there is no constraint on the location of such elements. The array of light deviation elements is, in one embodiment, located close to the image device.

The invention is not limited to the embodiments described. For instance, instead of having parallel rays emerging from each pixel or sub-pixel, it is possible to use a diverging light beam, provided that the image device is such that pixels or sub-pixels are sufficiently separated.

In the embodiment shown on figure 4, the area of the array 16 is substantially equal to the area of the mirror array 18. When a non-parallel beam emerges from array 18, the area of the array 16 is greater than the area of mirror array 18.

## Claims

1. A projector device comprising a matrix type image element (18) and an optical system (20) for projecting the image on a screen (30), said projector device comprising an array of lenses (16) in order to focus each pixel or sub-pixel element of the matrix type image on the screen in such a way to produce a black matrix array inside of which are located the projected pixels or sub-pixels.

2. The projector device according to claim 1 wherein the array of lenses is of the fly-eye type, the number of lenses corresponding to the number of pixels or sub-pixels of the image element.

3. The projector device according to claim 1 wherein the array of lenses comprises an array of elongated cylindrical lenses.

4. The projector device according to claim 3 wherein the array of elongated cylindrical lenses comprises two sets of cylindrical lenses, the elongation axis of the first set being perpendicular to the elongation axis of the second set.

5. The projector device according to claim 4 wherein the two sets of cylindrical lenses are separate elements.

6. The projector device according to claim 4 wherein the two sets of cylindrical lenses form a single element.

7. The projector device according to any of the previous claims comprising means to move the lens array in order to modify the dimensions of the black matrix pattern on the screen.

8. The projector device according to claim 4 and to claim 7, comprising means to display separately the two sets of cylindrical lenses.

9. The projector device according to any of the previous claims wherein the image element is selected in the group comprising: a digital mirror device, a liquid crystal device and a liquid crystal on silicon.
